# EUROPEAN PATENT SPECIFICATION

(11) **EP 1 969 915 B1**
(45) Date of publication and mention of the grant of the patent: **17.11.2010**
(21) Application number: 08152292.2
(22) Date of filing: 05.03.2008
(51) Int. Cl.: A01B 33/02

(54) **Walking type cultivating machine**
Handgeführte Kultiviermaschine
Machine de culture physique de type marche

(30) Priority: 06.03.2007 JP 2007055226; 06.03.2007 JP 2007055227; 06.03.2007 JP 2007055228
(43) Date of publication of application: 17.09.2008
(73) Proprietor: Yanmar Co., Ltd., Osaka-shi, Osaka 530-0013 (JP)
(72) Inventor: Hayata, Hiromitsu c/o Yanmar Agricultural Equipment Co., Ltd., Osaka 530-0013 (JP); Nishimura, Shuji c/o Yanmar Agricultural Equipment Co., Ltd., Osaka 530-0013 (JP)
(74) Representative: Peckmann, Ralf

(56) References cited:
- DE-A1- 1 557 761
- DE-B- 1 017 831
- GB-A- 717 096
- US-A- 2 750 859
- US-A- 4 402 366
- US-A1- 2001 023 518
- US-A1- 2003 098 166
- US-A1- 2003 230 416
- US-B1- 6 945 333

## Description

### BACKGROUND OF THE INVENTION

### Field of the Invention

This invention relates to a walking type cultivating machine (or plough) including an engine and a cultivating shaft unit.

### Related Art

There is a known walking type cultivating machine including an engine, a transmission mechanism having an input side which is operatively connected to the engine, a transmission case in which the transmission mechanism is accommodated, an engine frame extending forward from the transmission case so as to support the engine, a handle frame extending upward from the transmission case, a hitch frame extending rearward from the transmission case, a handle unit supported by the handle frame, and a cultivating shaft unit operatively connected to an output side of the transmission mechanism (see, for example, Japanese Patent Applications Laid-open Nos.7-47847, 2003-11857 and 11-146702).
DE 1 017 831 describes a walking type cultivating machine comprising an engine, a transmission housing, a machine frame consisting of two angle steels that sandwich the transmission housing, two guidance bars, an attachment element, a handle unit and a cultivating shaft. The walking type cultivating machine can be guided by an operator by means of the handle unit to work land.

In manufacturing such a walking type cultivating machine, the frames and the transmission case are first formed individually and sent them to an assembling factory. Then, as a final step, the frames and the transmission case are assembled together using bolts and the like in the assembling factory to complete the walking type cultivating machine.

However, in many cases, the plurality of frames are similar in shape one another, and/or the frames and the transmission case have shapes that are not distinguishable with respect to their longitudinal directions and lateral directions. Therefore, the assembling work must be carried out while checking these members with a design drawing when they are assembled, resulting in a problem that enormous efforts must be expended at the time of the assembling work. Further, there is a problem that the frames are likely to be assembled in wrong directions, resulting in a worse productivity.

The present invention has been accomplished in view of the conventional techniques, and it is an object of the present invention to provide a walking type cultivating machine capable of preventing error in assembling the frames, thereby enhancing the productivity.

### SUMMARY OF THE INVENTION

A first aspect of the present invention provides a walking type cultivating machine comprising an engine, a transmission mechanism having an input side which is operatively connected to the engine, a transmission case in which the transmission mechanism is accommodated, an engine frame extending forward from the transmission case so as to support the engine, a handle frame extending upward from the transmission case, a hitch frame extending rearward from the transmission case, a handle unit supported by the handle frame, and a cultivating shaft unit operatively connected to an output side of the transmission mechanism, a pair of plate members opposed to each other with sandwiching the transmission case therebetween, the plate members including central regions fixed to the transmission case in a state of being contacted to outer surfaces of the transmission case, front regions and rear regions respectively extending forward and rearward from the central region, the front regions and the rear regions respectively form the engine frame and the hitch frame, respectively, the transmission case includes a pair of side walls opposed to each other in a widthwise direction of the cultivating machine, wherein the walking type cultivating machine is characterized in that the transmission case and the engine frame are integrally fixed to each other in an inseparable manner, each of the side walls has one region that bulges outward in the widthwise direction with a step from the other region so as to form a bulging region, the central regions of the plate members are formed with recesses that open upward as viewed from the side, and the plate members are fixed to the transmission case in a state where parts of the steps are engaged into the corresponding recesses.

According to the walking type cultivating machine, it is possible to complete the assembling work only by mounting another components to a pre-assembly in which the transmission case and the engine frame are integrally fixed to each other in the assembling work in the assembling factory or the like.
Therefore, the labor required at the time of the assembling work can be reduced and assembling error can be prevented, thereby reducing the manufacturing cost and enhancing the quality and the productivity.

The first aspect of the present invention also provides a walking type cultivating machine including the engine, the transmission mechanism, the transmission case, the engine frame, the handle frame, the hitch frame, the handle unit and the cultivating shaft unit, wherein the engine frame and the handle frame are integrally fixed to each other in an inseparable manner.

According to the walking type cultivating machine, it is possible to complete the assembling work only by mounting another components to a pre-assembly in which the engine frame and the handle frame are integrally fixed to each other in the assembling work in the assembling factory or the like.
Therefore, the labor required at the time of the assembling work can be reduced and assembling error can be prevented, thereby reducing the manufacturing cost and enhancing the quality and the productivity

The first aspect of the present invention also provides a walking type cultivating machine including the engine, the transmission mechanism, the transmission case, the engine frame, the handle frame, the hitch frame, the handle unit and the cultivating shaft unit, wherein the engine frame and the hitch frame are integrally fixed to each other in an inseparable manner.

According to the walking type cultivating machine, it is possible to complete the assembling work only by mounting another components to a pre-assembly in which the engine frame and the hitch frame are integrally fixed to each other in the assembling work in the assembling factory or the like.
Therefore, the labor required at the time of the assembling work can be reduced and assembling error can be prevented, thereby reducing the manufacturing cost and enhancing the quality and the productivity.

In any one of the above various configurations, the walking type cultivating machine may further include a pair of plate members opposed to each other with sandwiching the transmission case therebetween, the plate members including central regions fixed to the transmission case in a state of being contacted to outer surfaces of the transmission case, front regions and rear regions respectively extending forward and rearward from the central region.
The front regions and the rear regions respectively form the engine frame and the hitch frame.

Specifically, the pair of plate members are disposed so as to be opposed to each other with sandwiching the transmission case. The central regions of the pair of plate members are respectively fixed to one outer surface and the other outer surface of the transmission case with contacting to the corresponding outer surfaces.
The pair of plate members further include the front regions extending frontward in a fore-and-aft direction of the cultivating machine from the central regions and forming the engine frame, and the rear regions extending rearward in the foxe-and-aft direction and forming the hitch frame.
The configuration makes it possible to firmly fix the engine frame and the hitch frame to the transmission case, thereby omitting the necessity of securing rigidity of the transmission case by itself, and obtaining high rigidity while reducing the number of components as much as possible.

More preferably, the transmission case may include a pair of side walls opposed to each other in a widthwise direction of the cultivating machine. Each of the side walls has one region that bulges outward in the widthwise direction with a step from the other region so as to form a bulging region. The central regions of the plate members are formed with recesses that open upward as viewed from the side. The plate members are fixed to the transmission case in a state where parts of the steps are engaged into the corresponding recesses.

The configuration makes it possible to fix the plate members to the transmission case by welding or the like in a state where the steps of the transmission case are engaged into the corresponding recesses, thereby easily and rapidly performing a fixing work of the transmission case and the plate members.

More preferably, each of the bulging regions may include, in an outer shape as viewed from the side, a pair of straight sides that extend along a longitudinal direction of the transmission case and a lower curved portion that connects lower ends of the pair of straight sides and that is convex downward. The recess extends in a fore-and-aft direction of the cultivating machine so as to be across a lowest point of the lower curved portion, and one end of front and rear ends of the lower curved portion reaches corresponding one of the front and rear straight sides.

According to the configuration, the transmission case is engaged into the recesses of the plate members over a region including parts of the one straight sides and the lowest point of the lower curved portion.
That is, the configuration makes it possible to perform the fixing work of the transmission case and the plate members in a state where the transmission case is stabilized with respect to its vertical position thanks to the engagement of the lowest point of the lower curved portion of the steps into the corresponding recesses and the transmission case is also stabilized with respect to its posture with respect to the fore-and-aft direction of the cultivating machine thanks to the engagement of parts of the straight sides of the steps into the corresponding recesses, thereby easily and rapidly performing the fixing work.

More preferably, the transmission mechanism may include an input shaft supported by the transmission case in a state capable of being operatively connected to the engine, a speed reduction gear unit which reduce the rotational speed of the input shaft, an output shaft supported by ' the transmission case in a state capable of being operatively connected to the cultivating shaft unit, and a chain unit which transmits the rotational power whose speed is reduced by the speed reduction gear unit to the output shaft. Gears of the speed reduction gear units are accommodated in an internal space defined by the bulging regions.

According to the configuration, the bulging regions of the transmission case could be utilized as not only a positioning member but also an accommodating member for the gears. The configuration makes it possible to reduce a size and a thickness of regions of the transmission case other than the bulging regions Further as much as possible, thereby downsizing and thinning the cultivating machine.

The handle frame may be fixed to the rear regions of the plate members and rear end surface of the transmission case in a state of being sandwiched by the rear regions.

The configuration makes it possible to realize a firm fixing between the plate members and the transmission case, thereby enhancing rigidity of the cultivating machine.

An embodiment of the present invention provides a clutch lever structure applied to a walking type working machine or the like. Specifically, the embodiment of the present invention relates to the clutch lever structure including a clutch lever that is positioned below a grip of a handle bar and that is rotatable around a pivot shaft.

There has been conventionally known a so-called deadman type clutch lever structure as a clutch lever structure used for the walking type cultivating machine (see, for example, Japanese Patent Applications Laid-open Nos.2001-275403 and 2004-284413).

The deadman type clutch lever structure is configured so as to be brought into a transmission state through an operation wire when an operator grasps a clutch lever, and to be brought into a power shut-off state when the operator releases his or her hand. According to such a clutch lever structure, when an operator feels danger, the clutch is brought into the power shut-off state only by releasing the hand from the clutch lever so that the cultivating machine is stopped, thereby enhancing the safety.

The deadman clutch lever structure, however, requires the operator to always grasp the clutch lever during the operation of the cultivating machine.

Further, the clutch lever structure is configured so that the clutch is brought into the power transmitting state by grasping the clutch lever to pull the operation wire. That is, as the operating amount of the clutch lever is increased (i.e., as the grasping amount of the clutch lever becomes greater), an operating force required for pulling the wire is increased, resulting in a problem that an operator excessively becomes fatigued especially in a long time operation.

In view of the conventional technique, the embodiment of the present invention provides a clutch lever structure having a clutch lever provided on a handle frame, the clutch lever structure making it possible to operate the clutch lever with a lighter operating force.

The embodiment of the present invention provides a clutch lever structure including a clutch lever that is located below a grip portion of a handle bar and that is rotatable around a pivot shaft, the clutch lever being positioned at a clutch releasing position away from the grip portion by a biasing force of a biasing member of a clutch mechanism when the operating force is not applied to the clutch lever, and being positioned at a clutch engaging position close to the grip portion when the operating force is applied to the clutch lever against the biasing force; an operation wire for transmitting the operating force from the clutch lever to the clutch mechanism; and a guide member for guiding the operation wire in a vicinity of the clutch lever, wherein the clutch lever has a connecting portion to which the operation wire is connected, and the connecting portion comes close to a virtual plane passing a guide position of the operation wire by the guide member and an axis line of the pivot shaft as the clutch lever is rotated around the pivot shaft from the clutch releasing position to the clutch engaging position.

According to the clutch lever structure of the second aspect of the present invention, since the connecting portion of the clutch lever to which the operation wire is connected comes close to the virtual plane passing the guide position of the operation wire and the axis line of the pivot shaft of the clutch lever as the clutch lever is operated to the clutch engaging position, it is possible to reduce the operating force required for operating the clutch lever as the clutch lever comes to the clutch engaging position, thereby preventing an operator from being fatigued in a long time operation..

Preferably, the connecting portion of the clutch lever is positioned substantially opposite from the guide member with the pivot shaft as a reference when the clutch lever is positioned at the clutch engaging position.
The configuration makes it possible to position the connecting portion of the clutch lever to which the operation wire is connected close to the virtual plane as near as possible when the clutch lever is positioned at the clutch engaging position, thereby making the operating force of the clutch lever lightest at the clutch engaging position at which the clutch lever is positioned during the operation, and effectively reducing the load of the operator.

More preferably, the operation wire is brought into contact with the pivot shaft when the clutch lever is positioned at the clutch engaging position.

Alternatively, the clutch lever may be provided with a groove at a center of a supporting portion, which is supported by the pivot shaft, in the axis line direction of the pivot shaft. The groove is configured so that the operation wire is engaged into the groove when the clutch lever is positioned at the clutch engaging position.

Further, the clutch lever structure may include a mounting stay mounted to the handle bar, wherein the guide member and the pivot shaft are provided at the mounting stay.
According to the configuration, it is possible to firmly secure a relative position between the pivot shaft and the guide position of the operation wire by the guide member. Further, according to the configuration, since the virtual plane passing the guide position and the axis line of the pivot shaft is defined by a single member, it is possible to prevent a manufacturing error from occurring.

A further embodiment of the present invention provides a walking type cultivating machine including an engine and a fuel tank disposed above the engine.

There has been conventionally known a structure in which a fuel tank is provided above an engine, in a walking type cultivating machine which carries out cultivating operation or weeding operation by an operating machine mounted on a machine body In such a walking type cultivating machine, an exhausting muffler is provided on one of sides of the engine in the widthwise direction of the cultivating machine. Therefore, if fuel is spilled from a fuel supply port erroneously when fuel is supplied to the fuel tank above the engine, there is a fear that the fuel reaches the high temperature muffler through a side surface of the fuel tank.

In order to overcome the problem, there is disclosed a structure in which a fuel tank is provided with a shielding member functioning as a heat shielding member for the muffler and also as a fuel drip preventing member for preventing fuel from flowing down to the muffler when fuel is supplied (see, for example, Japanese Patent Application Laid-open No.2006-151072).

However, as described in the prior art document, in order to utilize one shielding member as the heat shielding means for the muffler and also as the fuel drip preventing means, the shielding member has to be extended very long from the fuel tank, resulting in lack of the strength of the shielding member and/or increase of the weight. Further, the conventional structure has to change the structure of the fuel tank (and the shielding member provided on the fuel tank) in a case where the engine and the muffler are changed in specifications, resulting in a worsened producing efficiency.

In view of the conventional technique, the further embodiment of the present invention provides a walking type cultivating machine capable of preventing fuel from dripping toward the muffler without increasing the weight.
That is, the present invention provides a walking type cultivating machine including an engine and a fuel tank disposed above the engine, wherein a fuel supply port of the fuel tank and a muffler of the engine are respectively located on one side and the other side with a center of a widthwise direction of the cultivating machine as a reference.

According to the walking type cultivating machine of the further embodiment of the present invention, the fuel supply port and the muffler are positioned separately from each other in the widthwise direction of the walking type cultivating machine. Therefore, it is possible to effectively prevent fuel from coming into contact with the muffler, even if fuel spills when fuel is supplied to the fuel tank through the fuel supply port.

Further, the structure makes it possible to increase the distance between the fuel supply port and the muffler as much as possible, thereby omitting the shielding member which is necessary in the conventional technique. That is, it is possible to prevent fuel from dripping toward the muffler in a case where fuel spills when fuel is supplied, without increasing weight and size caused by the shielding member.

Preferably, the walking type cultivating machine may include a cover for covering upper portion of the fuel tank while allowing an access to the fuel supply port of the fuel tank. The cover includes an inclined surface provided at least a part of a region between the fuel supply port positioned on a first side of the center of the widthwise direction of the cultivating machine and an end of a second side of the cover which is opposite the first side in the widthwise direction and on which the muffler is positioned, the inclined surface being positioned downward as it approaches to the first side.

According to the configuration, even if fuel is unintentionally overflowed out of the fuel supply port and dripped onto the cover at a position above the fuel supply port when fuel is supplied, the overflowed fuel is flown back toward the fuel supply port (toward the first side) by the inclined surface, thereby effectively preventing the fuel from flowing toward the muffler (toward the second side).

The further embodiment of the present invention also provides a walking type cultivating machine including an engine, a fuel tank disposed above the engine and a cover for covering an upper portion of the fuel tank while allowing an access to a fuel supply port of the fuel tank, wherein the cover has a curved shape that is convex upward, the fuel supply port is disposed on one side in a widthwise direction of the cultivating machine with a virtual central vertical plane as a reference, the virtual central vertical plane passing through a top point of the cover and extending along a fore-and-aft direction of the cultivating machine, and a muffler of the engine is disposed on the other side in the widthwise direction with the virtual central vertical plane as a reference.

According to the walking type cultivating machine, the fuel supply port and the muffler are separately positioned in the widthwise direction with the virtual central vertical plane. Therefore, even if fuel is unintentionally overflowed out of the fuel supply port and dripped onto the cover at a position above the fuel supply port when fuel is supplied, it could be prevented that the overflowed fuel is flown toward the muffler (toward the other side).

### BRIEF DESCRIPTION OF THE DRAWINGS

The above, and other objects, features and advantages of the present invention will become apparent from the detailed description thereof in conjunction with the accompanying drawings wherein.
Fig. 1 is a perspective view of a walking type cultivating machine according to one embodiment of the present invention.
Fig. 2 is a right side view of the cultivating machine shown in Fig. 1.
Fig. 3 is a front view of the cultivating machine shown in Figs. 1 and 2.
Fig. 4 is an enlarged side view of cultivating pawls in the walking type cultivating machine shown in Figs. 1 to 3.
Fig. 5 is an enlarged rear view in a vicinity of a cover in the walking type cultivating machine shown in Figs. 1 to 3.
Fig. 6 is a perspective view of an inner side of the cover shown in Fig. 5.
Fig. 7 is a side view a pre-assembly of the cultivating machine shown in Figs. 1 to 3, the pre-assembly including a transmission case and frames fixed to the transmission case.
Fig. 8 is a plan view of the pre-assembly shown in Fig. 7.
Fig. 9 is a sectional view taken along line IX-IX in Fig. 7.
Fig. 10 is a perspective view of an interior of the transmission case in the cultivating machine shown in Figs. 1 to 3.
Figs. 11 is a left side view of a clutch mechanism in the walking type cultivating machine shown in Figs. 1 to 3.
Fig. 12 is a perspective view of the clutch mechanism.
Fig. 13 is a right perspective view of the clutch mechanism.
Fig. 14 is an outline view of a clutch lever structure applied to the walking type cultivating machine shown in Figs. 1 to 3, as viewed from a direction along a pivot shaft of a clutch lever in the clutch lever structure, and shows a non-operated state of the clutch lever.
Fig. 15 is an outline view of the clutch lever structure as viewed from the direction along the pivot shaft of a clutch lever, and shows an operated state of the clutch lever.
Fig. 16 is an outline view of the clutch lever structure shown in Figs. 14 and 15, as viewed from below, and shows the non-operated state of the clutch lever.
Fig. 17 is an outline view of the clutch lever structure shown in Figs. 14 and 15, as viewed from below, and shows the operated state of the clutch lever.

### DETAILED DESCRIPTION OF THE PREFERRED EMBODIMENTS

Hereinafter, a preferred embodiment of a walking type cultivating machine according to the present invention will be explained with reference to the accompanying drawings below.

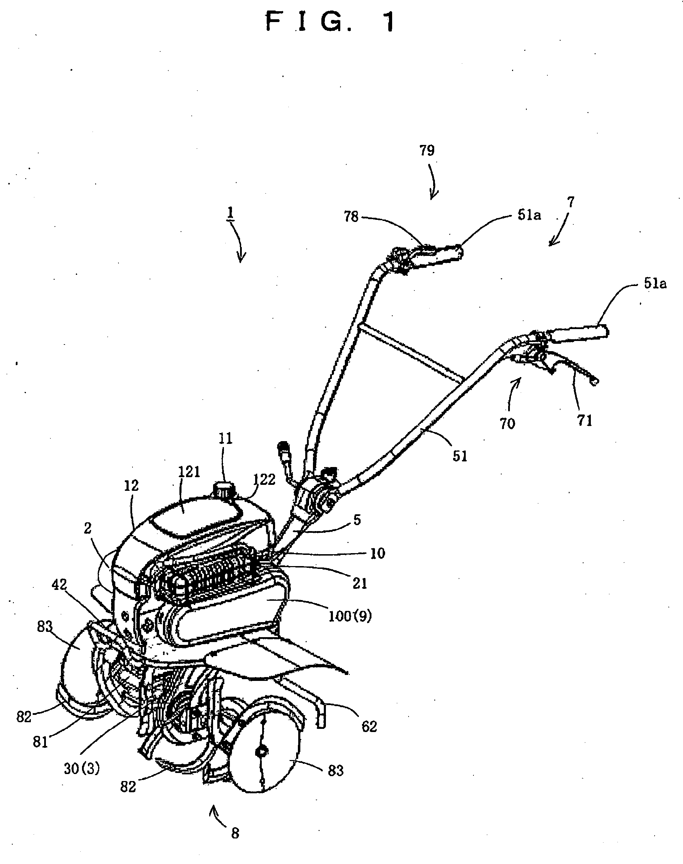

Figs. 1 to 3 are, respectively, a perspective view, a right side view and a front view of a walking type cultivating machine 1 according to this embodiment of the present invention.

In the embodiment, terms indicating directions such as front, rear, left and right are based on a direction of a forward moving (a direction as viewed from an operator who operates the walking type cultivating machine 1) of the walking type cultivating machine 1 unless otherwise specified.

The walking type cultivating machine 1 according to this embodiment includes an engine 2, a transmission mechanism 3 having an input side operatively connected to the engine 3, a transmission case 30 in which the transmission mechanism 3 is accommodated, an engine frame 4 extending forward from the transmission case 30 so as to support the engine 2, a handle frame 5 extending upward from the transmission case 40, a hitch frame 6 extending rearward from the transmission case 30, a handle unit 7 supported by the handle frame 5, and a cultivating shaft unit 8 operatively connected to an output side of the transmission mechanism 3.

More specifically, the engine 2 is operatively connected to the transmission mechanism 3, which has the input side disposed behind the engine 2, through a clutch mechanism 9 disposed on the left side of the engine 2.

The transmission case 30 that accommodates the transmission mechanism 3 extends forward and downward from the input side so that the output side of the transmission mechanism 3 is operatively connected to the cultivating shaft unit 8 below the engine 2.

The cultivating shaft unit 8 includes a cultivating shaft 81 that is rotatable around its axis line and that is operatively connected to the output side of the transmission mechanism 3 at substantially a central portion in the axis line direction, cultivating pawls 82 that are supported on the cultivating shaft 81 in a relatively non-rotatable manner so as to cultivate the ground in accordance with the rotation of the cultivating shaft 81, and side disks 83 provided on the cultivating shaft 81 at an outer side from the cultivating pawls 82 in the widthwise direction.

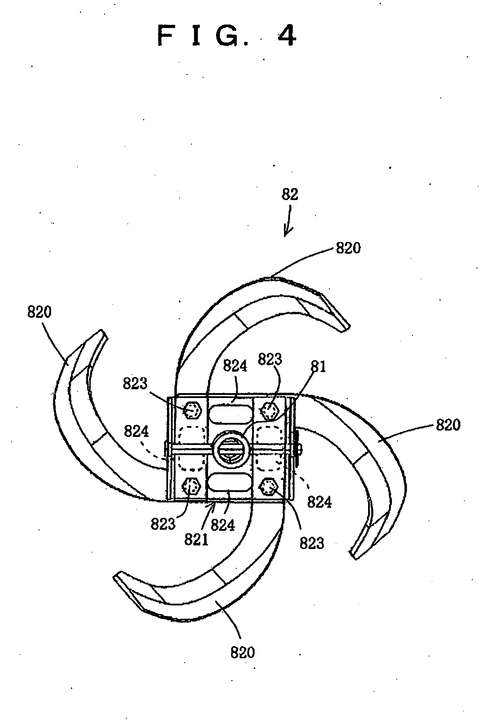

Fig. 4 is an enlarged side view of the cultivating pawls 82 in the walking type cultivating machine 1.
In the embodiment, the cultivating shaft unit 8 includes the plurality of cultivating pawls 82 disposed along the axis line direction of the cultivating shaft 8.

Each cultivating pawl 82 includes a plate-like pawl mounting member 821 that is fixed to the cultivating shaft 81 in a relatively non-rotatable manner, and a plurality of pawl members 820 fixed to the pawl mounting member 821 through fastening members 823.

The plurality of pawl members 820 are disposed around the axis of the cultivating shaft 81 at substantially equal distances from one another.

In this embodiment, some of the plurality of pawl members 820 are fixed to an outer surface of the pawl mounting member 821, and other pawl members 820 are fixed to an inner surface of the pawl mounting member 821.

The pawl members 820 fixed to the outer surface of the pawl mounting member 821 are symmetrically disposed as the axis line of the cultivating shaft 81 as a reference, and the other pawl members 820 fixed to the inner surface of the pawl mounting member 821 are symmetrically disposed with the axis line of the cultivating shaft 81 as a reference.

The pawl members 820 fixed to the outer surface of the pawl mounting member 821 and the other pawl members 820 fixed to the inner surface of the pawl mounting member 821 are displaced from to each other around the axis of the cultivating shaft 81.

In this embodiment, two of the pawl members 820 are mounted on each of the outer surface and the inner surface of the pawl mounting member 821. The total four pawl members 820 have proximal ends connected to the cultivating shaft 81 and free ends extending radially outward such as to form a substantially cross-shape as viewed from the axis line direction of the cultivating shaft 81.

In this embodiment, the pawl mounting member 821 has openings 824 at parts of regions to which the proximal ends of the pawl members 820 are contacted.

More specifically, in this embodiment, the pawl mounting member 821 has a substantially square shape as viewed from side, and has the openings 824 at a vicinity of the central portion of each side, the openings 824 being along the longitudinal direction of the corresponding proximal ends of the pawl members 820.

The pawl members 820 are fixed to the pawl mounting member 821 through the fastening members 823 disposed such as to sandwich the openings 824 (that is, disposed on both end sides of the opening 824 in the longitudinal direction) in a state where the proximal ends cover the openings 824.

By providing the pawl mounting member 821 with the openings 824 and fixing the pawl members 820 to the pawl mounting member 821 in a state where the proximal ends cover the openings 824, as described above, it is possible to reduce the weight of the cultivating shaft unit 8 while maintaining rigidity thereof.

The cultivating machine 1 according to this embodiment includes a fuel tank 10 disposed above the engine 2. The fuel tank 10 is provided at its upper portion with a fuel supply port 11. The cultivating machine 1 further includes a cover 12 disposed above the fuel tank 10 for covering upper portions of the fuel tank 10 and the engine 2 while allowing an access to the fuel supply port 11.

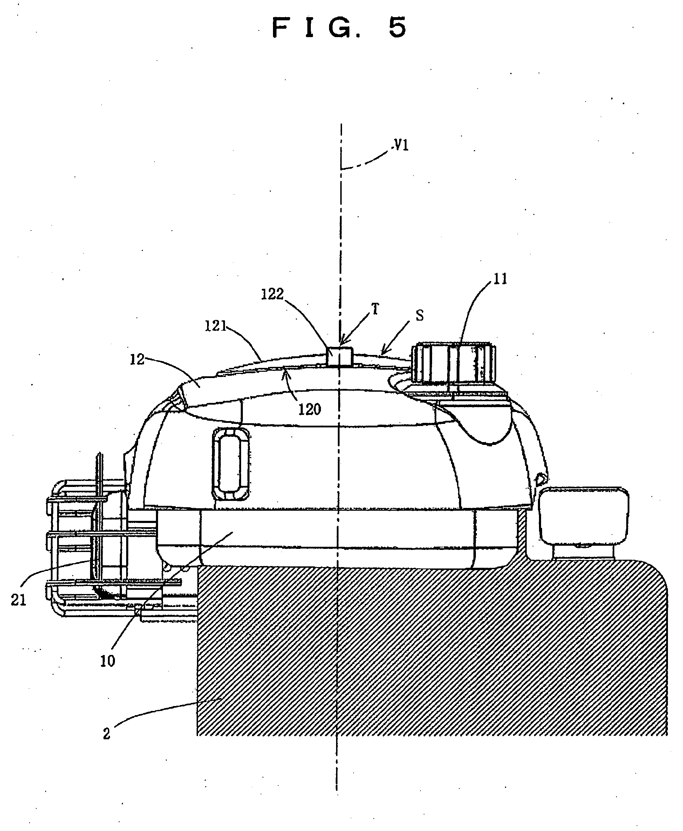

Fig. 5 is an enlarged rear view of the cover 12 in the walking type cultivating machine 1 shown in Fig. 1.
In the embodiment, the cover 12 has a curved shape that is convex upward as shown in Figs. 1 to 3 and 5. The fuel supply port 11 is disposed on one side (a right side in this embodiment) in the widthwise direction with a virtual central vertical plane V1 as a reference, the virtual central vertical plane V1 passing through a top point T of the cover 12 and extending along the fore-and-aft direction of the walking type cultivating machine 1, while the muffler 21 of the engine 2 is disposed on the other side (a left side in this embodiment) with the virtual central vertical plane V1 as a reference.

That is, in this embodiment, the fuel supply port 11 of the fuel tank 10 and the muffler 21 of the engine 2 are respectively disposed on the one side (the right side in this embodiment) and the other side (the left side in this embodiment) with the center of the walking type cultivating machine 1 in the widthwise direction as a reference.

More specifically, the fuel supply port 11 is disposed at the right side of the upper surface of the fuel tank 10. The cover 12 is provided with an opening at the corresponding position that allows an access to the fuel supply port 11.
The muffler 21 is provided on the left surface of the engine 2.

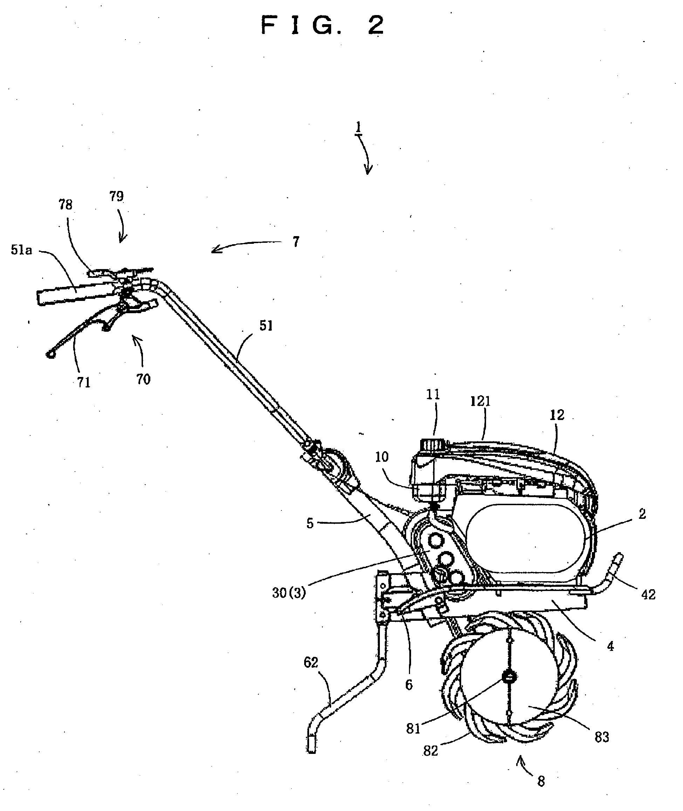

In the embodiment, as shown in Fig. 2, the fuel tank 10 is disposed above the engine 2 in such a manner that its front end is located at substantially the same position as the front end of the engine 2 in the fore-and-aft direction and its rear end is located rearward of the rear end of the engine 2. The fuel supply port 11 is provided on the rear end side of the upper surface of the fuel tank 10 so as to be separated from the engine 2 which is heated to a high temperature.

In the embodiment, the cover 12 for covering the upper portion of the fuel tank 10 has a curved shape that is convex upward, as described above. The fuel supply port 11 of the fuel tank 10 and the muffler 21 of the engine 2 are disposed on both sides (in the widthwise direction) with the virtual central vertical plane V1 as a reference, which passes through the top point of the cover 12 and extends in the fore-and-aft direction of the walking type cultivating machine 1.

The configuration makes it possible to increase the distance between the fuel supply port 11 and the muffler 21 as much as possible, thereby preventing fuel from dripping toward the muffler 21 even if fuel spills when fuel is supplied, without increasing the cultivating machine in weight and in size.

That is, in the conventional cultivating machine, since the fuel supply port and the muffler are disposed close to each other, a shielding member has to be provided in order to prevent the fuel drip toward the muffler in a case where fuel spills when fuel is supplied, resulting in the increase of weigh and size of the cultivating machine.

On the other hand, the walking type cultivating machine 1 according to this embodiment is configured so that the fuel supply port 11 and the muffler 21 are respectively disposed on the one side and the other side in the widthwise direction with the virtual central vertical plane V1 as a reference, as described above.
Therefore, it is possible to prevent the fuel from dripping toward the muffler 21 even if fuel spills when fuel is supplied, without increasing the cultivating machine 1 in weight and size.

In the embodiment, the cover 12 having the shape that is convex upward is configured so that the top point T is positioned on the virtual central vertical plane V1. That is, the cover 12 is configured so that a region between the fuel supply port 11 and the top point T is a inclined surface S that is positioned downward as it approaches the outward end in the widthwise direction.

Therefore, even if fuel is unintentionally overflowed out of the fuel supply port 11 and dripped onto the cover 12 at a position above the fuel supply port 11 when fuel is supplied, the overflowed fuel is flown back toward the fuel supply port 11 (that is, the rightward) by the inclined surface S between the fuel supply port 11 and the top point T, thereby effectively preventing the fuel from flowing toward the muffler 21 (that is, the leftward).

By providing the configuration in which the cover 12 includes the inclined surface S1, in addition to the configuration in which the fuel supply port 11 and the muffler 21 are respectively disposed on the one side and the other side in the widthwise direction with the virtual central vertical plane V1 as a reference, it is possible to more effectively prevent fuel from dripping toward the muffler even if fuel spills when fuel is supplied.

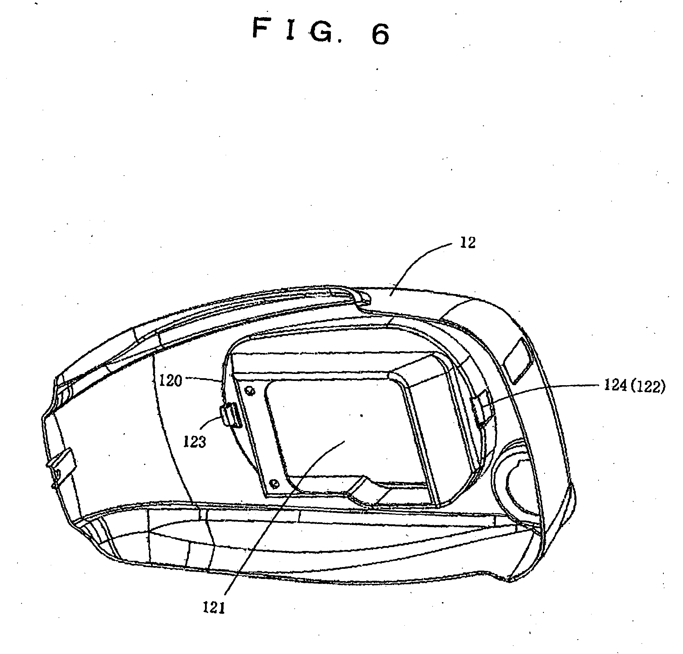

Fig. 6 is a perspective view showing an inner side of the cover 12.
In this embodiment, as shown in Figs. 5 and 6, the cover 12 is formed with an opening 120 at its upper central region, which allows an access to the upper portion of the engine 2 from outside. The opening 120 is closed by a detachable upper lid 121. The upper lid 121 is attached to the cover 12 such as to close the opening 120 in a state where the upper surface of the cover 12 and the upper lid 121 are flush with each other.

The upper lid 121A is provided with a rigid engagement piece 123 at a central portion of its front end. The engagement piece 123 is engaged with the inner surface of the cover 12 at a vicinity of a central portion of the front end of the opening 120 when the upper lid 121 closes the opening 120. The upper lid 121 is also provided with an elastic engagement piece 124 at a central portion of its rear end. The engagement piece 124 is engaged with the inner surface of the cover 12 at a vicinity of a central portion of the rear end of the opening 120 when the upper lid 121 closes the opening 120. The engagement piece 124 is elastically deformed so as to generate a biasing force toward the rear end of the opening 120 when the upper lid 121 is mounted to the cover 12 so as to close the opening 120. The engagement piece 124 includes a knob piece 122 extending upward from an upper surface of the upper lid 121 so as to be capable of being manually operated. If the knob piece 122 is operated so that the engagement piece 124 is elastically deformed against the biasing force, the engagement between the engagement piece 124 and the cover 12 can be released. With this structure, the upper lid 121 can easily be attached to and detached from the cover 12 without using a tool.

A frame structure in the walking type cultivating machine 1 according to the embodiment will be now explained.

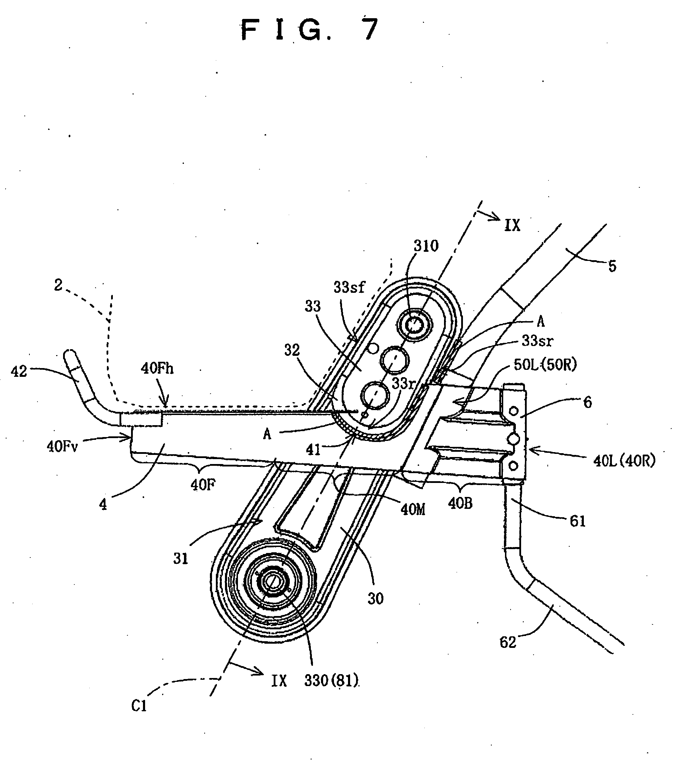

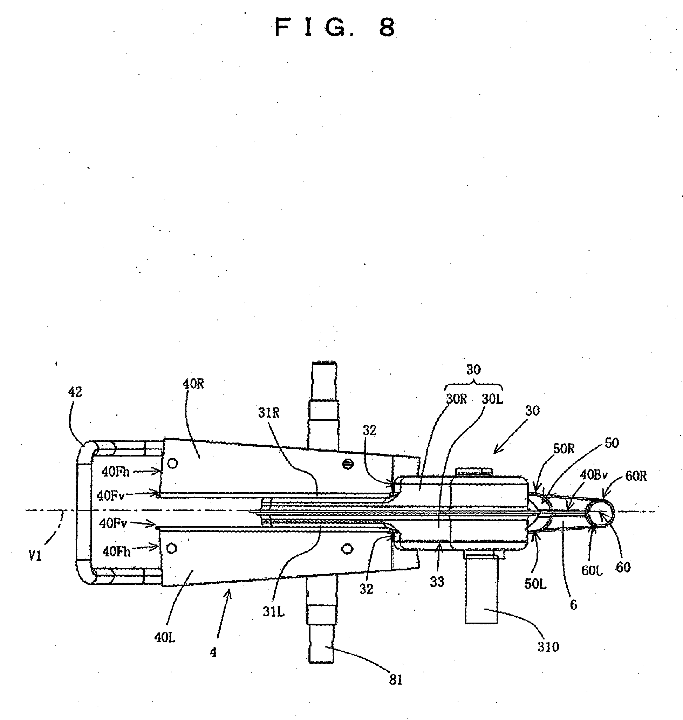

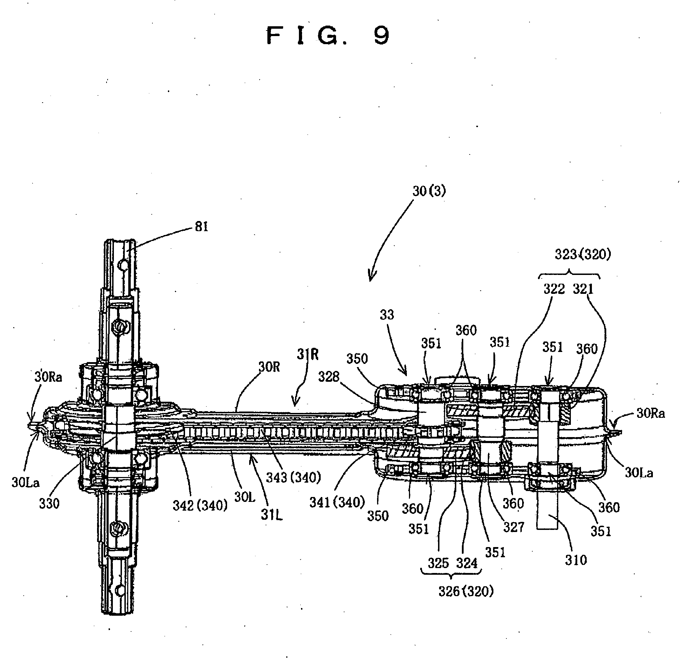

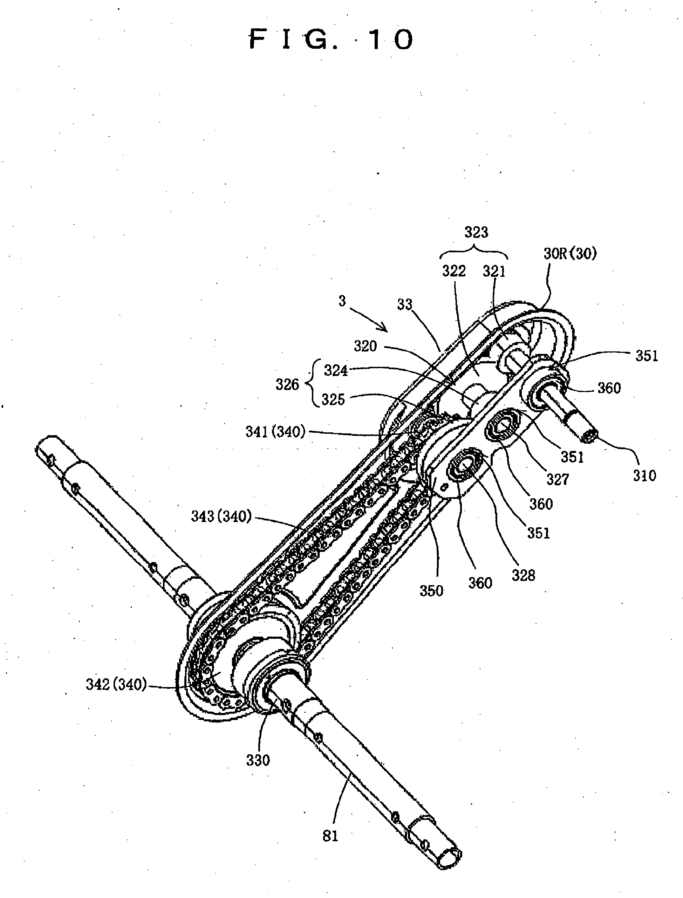

Figs. 7 and 8 are, respectively, a side view and a plan view of a pre-assembly including the transmission case 30 and the frames fixed to the transmission case 30. Fig. 9 is a sectional view taken along line IX-IX in Fig. 7. Further, Fig. 10 is a perspective view of an interior of the transmission case 30.

In the embodiment, the transmission case 30 includes a pair of case body member (a right case member 30R and a left case member 30L) which are contacted to each other so as to form an internal space for accommodating the transmission mechanism 3 (that is described later). Contacted portions of the pair of case body members 3 are fixed to each other over the entire peripheries by welding in an inseparable manner with accommodating the transmission mechanism 3 therein.

By welding the entire peripheries of the contacted portions in a state where the transmission mechanism 3 is accommodated in the internal space, it is possible to effectively prevent lubricating oil for gears (which is later-described) or the like in the transmission mechanism 3 from leaking outside.
Further, by forming a unit including the transmission case 3 and the transmission mechanism 3 accommodated in the transmission case 30, it is possible to facilitate the assembling work in the final step for assembling the components to complete the cultivating machine and to stabilize the quality of the cultivating machine.

In the embodiment, as shown in Fig. 9, the right case member 30R and the left case member 30L have the same shapes except for the width of flanges forming the contacted portions.

That is, the right case member 30R includes a sidewall 31R forming the internal space in cooperation with the left case member 30L, and a flange portion 30Ra extending outward from an outer peripheral edge of the sidewall 31R.
Similarly, the left case member 30L includes a sidewall 31L forming the internal space in cooperation with the right case member 30R, and a flange portion 30La extending outward from an outer peripheral edge of the sidewall 31L and contacting to the flange portion 30Ra of the right case member 30R.

The sidewall 31R of the right case member 30R and the sidewall 31L of the left case member 30L are symmetric to each other with contacted surfaces of the flange portions 30Ra and 30La.
On the other hand, one of the flange portions 30Ra, 30La of the right case member 30R and the left case member 30L is narrower in width than the other (In this embodiment, the flange portion 30Ra of the right case member 30R is narrower than the flange portion 30La of the left case member 30L).

By forming the right case member 30R and the left case member 30L into substantially the same shapes, as described above, it is possible to enhance the weight balance without increasing the design cost.

By making the widths of the flange portions 30Ra and 30La different to each other, as described above, it is possible to utilize an outwardly extending region of the wider flange portion 30Ra as a welding region. Thus, the configuration makes it possible to facilitate workability in welding the right case member 30R and the left case member 30L and to enhance rigidity of the transmission case 30 formed by the right case member 30R and the left case member 30L.

In the embodiment, as shown in Figs. 7 and 8, the transmission case 30 and the engine frame 4 are integrally fixed to each other in an inseparable manner. The engine frame 4 and the handle frame 5 are also integrally fixed to each other in an inseparable manner. The engine frame 4 and the hitch frame 6 are also integrally fixed to each other in an inseparable manner.
That is, the transmission case 30, the engine frame 4, the handle frame 5 and the hitch frame 6 are integrally fixed one another in an inseparable manner.

More specifically, the walking type cultivating machine 1 includes a pair of plate members (a right plate member 40R and a left plate member 40L) that are opposed to each other with the transmission case 30 interposed therebetween.

Each of the pair of plate members 40R and 40L includes a central region 40M fixed to the transmission case 30 by welding in a state of being contacted to the corresponding outer side surface of the transmission case 30, and a front region 40F and a rear region 40B respectively extending from the central region 40M forward and rearward. The front region 40F and the rear region 40B respectively form the engine frame 4 and the hitch frame 6.

The handle frame 5 is fixed to the rear region 40B and the rear end surfaces of the transmission case 30 in a state of being sandwiched between the rear regions 40B of the pair of plate members 40R and 40L.

That is, the pair of plate members 40R and 40L are opposed to each other with the transmission case 30 interposed therebetween. In details, the plate members 40R and 40L are fixed to the transmission case 30 in a state where the respective the central regions 40M are contacted to the corresponding outer side surfaces of the transmission case 30.

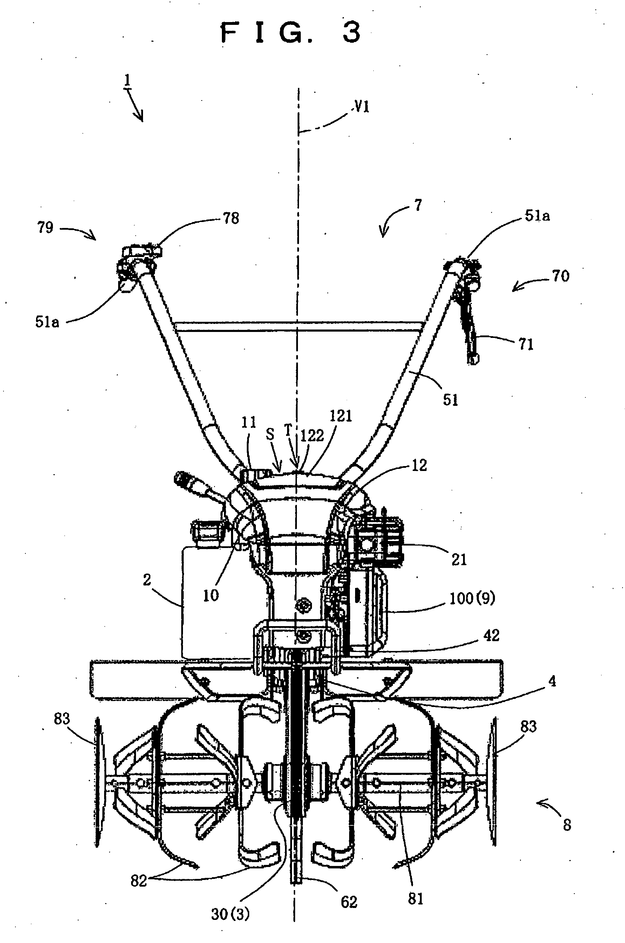

In the embodiment, the pair of plate members 40R and 40L are symmetric to each other with the virtual central vertical plane V1 as a reference (see Figs. 3 and 8), thereby enhancing the weight balance and simplifying a structure in which the transmission case 30 is sandwiched therebetween.

As described above, the front regions 40F of the plate members 40R and 40L extending forward from the central regions 40M form the engine frame 4, and the rear regions 40B of the plate members 40R and 40L extending rearward from the central regions 40M form the hitch frame 6.

More specifically, the front regions 40F of the plate members 40R and 40L include front vertical surface portions 40Fv extending substantially vertically, and front horizontal surface portions 40Fh extending horizontally and outward in the widthwise direction from the upper ends of the front vertical surface portions 40Fv. The engine 2 is supported on the upper surfaces of the front horizontal surface portions 40Fh (see broken line in Fig. 7).

As shown in Fig. 8, the front vertical surface portions 40Fv extend substantially vertically at positions outward of the virtual central vertical plane V1 in the widthwise direction. That is, the front vertical surface portion 40Fv of one (the right plate member 40R) of the pair of plate members is disposed substantially in parallel to the front vertical surface portion 40Fv of the other (the left plate member 40L) in the pair of plate members in a state where they are separated to each other in the widthwise direction.

The front horizontal surface portions 40Fh become wider as they approach their front ends, as shown in Fig. 8. More specifically, the outer end edges of the front horizontal surface portions 40Fh in the widthwise direction separate from the virtual central vertical plane V1 as they approach their front ends.

The configuration makes it possible to effectively secure a mounting surface on which the engine 2 is mounted while preventing an increase of the weight of the front region 40F as much as possible, thereby stabilize the support of the engine 2 while suppressing the increase of the weight of the cultivating machine.

In this embodiment, the cultivating machine 1 further includes a front bumper 42.
The front bumper 42 is formed into a substantially U-shape having a first end fixed to an outer end in the widthwise direction of the front horizontal surface portion 40Fh of one plate member (the right plate member 40R) by welding in an inseparable manner and a second end fixed to an outer end in the widthwise direction of the front horizontal surface portion 40Fh of the other plate member (the left plate member) by welding in an inseparable manner.
The provision of the front bumper 42 makes it possible to enhance rigidity of the plate members 40R and 40L.

The rear regions 40B of the pair of frame members 40 include handle supporting portions 50R and 50L forming a first insertion hole 50 into which a lower end of the handle frame 5 is inserted, rear vertical surface portions 40Bv which contact to each other on the virtual central vertical plane V1, and working machine supporting portions 60R and 60L forming a second insertion hole 60 into which a resistance rod or a connecting rod 61 for connecting an additional working machine such as a ridge-making machine to the cultivating machine is inserted.

Specifically, the first insertion hole 50 is formed by the handle supporting portions 50R, 50L of the plate members 40R, 40L. In this embodiment, the handle supporting portions 50R and 50L are formed so that the axis line of the first insertion hole 50 extends along the longitudinal direction of the transmission case 30.

The handle frame 5 is fixed to both the rear regions 40B of the plate members 40R and 40L and the rear end surface (a straight side 33s which is explained later) of the transmission case 30, in a state where the lower end of the handle frame 5 is inserted into the first insertion hole 50 (in a state where the lower end of the handle frame 5 is sandwiched between the plate members 40R and 40L).

According to the configuration, it is possible to more strongly fix the handle frame 5, the pair of plate members 40R, 40L and the transmission case 30 one another, thereby enhancing rigidity of the frame structure of the cultivating machine.

The second insertion hole 60 is formed by the operating machine support portions 60R, 60L of the plate members 40R, 40L. In this embodiment, the operating machine support portions 60R, 60L are formed so that the axis line of the second insertion hole 60 extends along substantially the vertical direction.

Into the second insertion hole 60, the resistance rod or the connecting rod for the additional working machine such as the ridge-making machine is mounted. In this embodiment, as shown in Figs. 1 to 3 and 7, the resistance rod 62 is mounted into the second insertion hole 60. The resistance rod 62 has an upper end inserted into the second insertion hole 60 and a lower end inserted into the ground in order to set the cultivating depth by the cultivating pawls 82 of the cultivating shaft unit 8 and add the resistance force against the traction force by the cultivating pawls 82.

In this embodiment, the plate members 40R, 40L are configured so as to have the handle supporting portions 50R, 50L and the working machine supporting portions 60R, 60L that respectively form the first insertion hole 50 and the second insertion hole 60 at a time when the plate members 40R, 40L are fixed to each other, as described above. The configuration makes it possible to facilitate the mounting work of the handle frame 5 and the resistance rod 6 or the connecting rod, and to fix the handle frame 5 and the resistance rod 6 or the connecting rod to the plate members 40R, 40L with high rigidity.

In this embodiment, the rear vertical surface portions 40Bv are positioned on the virtual central vertical plane V1. That is, the rear vertical surface portions 40Bv of the pair of plate member 40R, 40L are connected to each other on the virtual central vertical plane V1 by welding, thereby strongly fixing the plate members 40R, 40L to each other.

With the above configuration, the pair of plate members 40R, 40L forming the engine frame 4 and the hitch frame 6 are integrally fixed to each other in an inseparable manner in a state where the transmission case 30 is sandwiched therebetween.

In the embodiment, the transmission case 30 and the frames (here, the engine frame 4 and the hitch frame 6) are in advance integrally fixed to each other in an inseparable manner to form a pre-assembly unit, and they are sent to the final assembling step as the pre-assembly unit rather than the separate components. Therefore, it is possible to complete the walking type cultivating machine 1 only by assembling the remaining components to the pre-assembly unit in the final assembling step in an assembling factory or the like.
Therefore, it is possible to reduce the work load at the final assembling step and to prevent erroneous assembling, thereby reducing the manufacturing cost and stabilizing the quality as well as enhancing the productivity.

Furthermore, the configuration provides a firm connection among the engine frame 4, the hitch frame 6 and the transmission case 30. Therefore, it is possible to enhance the strength of the transmission case 30 without an additional reinforcing member for strengthening the rigidity of the transmission case 30.

In the embodiment, each of the pair of sidewalls 31 includes one region that bulges outward in the widthwise direction of the cultivating machine 1 with a step 32 from the other region, the one region forming a bulging regions 33.

Each of the plate members 40R and 40L includes, at its central regions 40M, a recess 41 which is opened upward as viewed from side.
The plate members 40R and 40L are fixed to the transmission case 30 in a state where parts of the steps 32 are engaged with the corresponding recesses 41.

More specifically, in this embodiment, as shown in Fig. 7, the bulging region 33 includes, in an outer shape as viewed from the side, a pair of straight sides (including a front straight side 33sf and a rear straight side 33sr respectively positioned on front and rear sides with a virtual central plane C1 as a reference, which passes through an axis line of a later-described input shaft 310 and an axis line of a later-described intermediate shafts 327 and 328) extending along the longitudinal direction of the transmission case 30, and a lower curved portion 33r which connects lower ends of the pair of straight sides 33sf and 33sr and which is convex downward.

The recess 41 extends in the fore-and-aft direction so as to be across the lowest point of the lower curved portion 33r. One (a rear end in this embodiment) of front and rear ends of the lower curved portion 33r reaches corresponding one (the rear straight side 33sr in this embodiment) of the front and rear straight sides.

That is, the bulging regions 33 are formed on parts of the pair of sidewalls 31, which are opposed to each other in the widthwise direction of the cultivating machine 1. The steps 32 of the bulging regions 33 are engaged into the recesses 41 formed in the central regions 40M of the plate members 40R and 40L so as to be over a region including a part of the rear straight side 33sr and the lowest point of the lower curved portion 33r.

The transmission case 30 and the plate members 40R, 40L are fixed one another by welding in a state where the steps 32 are engaged into the recesses 41. The welding between the transmission case and the plate members 40R, 40L may be performed at a part or a whole of a contacting region A where the step 32 and the recess 41 are contacted to each other.

The recess 41 opens upward as viewed from side as described above. Therefore, the transmission case 30 and the frame member 40 can be fixed to each other in a state where the step 32 and the recess 41 are brought into intimate contact with each other by own weight of the transmission case 30.

The step 32 is engaged with the recess 41 in the region including the lowest end of the lower curved portion 33r. The configuration makes it possible to stably hold the transmission case 30 with respect to the vertical position.

Further, the step 32 is engaged with the recess 41 in the region including a part of the rear straight side 33sr. The configuration makes it possible to stabilize the attitude of the transmission case 30 with respect to the fore-and-aft direction of the walking type cultivating machine 1.

Here, the transmission mechanism 3 accommodated in the transmission case 30 will be explained.
As shown in Figs. 9 and 10, the transmission mechanism 3 includes an input shaft 310 supported by the transmission case 30 in a state capable of being operatively connected to the engine 2 through the clutch mechanism 9 (which will be described later), a speed reduction gear unit 320 which reduce the rotational speed of the input shaft 310, an output shaft 330 supported by the transmission case 30 in a state where the cultivating shaft unit 8 can be operatively connected to the output shaft 330, and a chain unit 340 which transmits the rotational power whose speed is reduced by the speed reduction gear unit 320 to the output shaft 303.

In this embodiment, gears (which will be later described) in the speed reduction gear unit 320 are accommodated in an internal space defined by the bulging regions 33.

The speed reduction gear unit 320 includes a driving gear supported by the input shaft 310 in a relatively non-rotatable manner, an intermediate shaft supported by the inner surface of the transmission case 30 so as to be parallel to the input shaft 310, and a driven gear supported in a relatively non-rotatable manner by the intermediate shaft so as to be meshed with the driving gear.

In this embodiment, as shown in Fig. 9, the speed reduction ger unit 320 performs a two-stage speed reduction.
More particularly, the speed reduction gear unit 320 includes a first intermediate shaft 327 and a second intermediate shaft 328 as the intermediate shaft, a first driving gear 321 supported by the input shaft 310 in a relatively non-rotatable manner and a second driving gear 324 supported by the first intermediate shaft 327 in a relatively non-rotatable manner as the driving gears, a first driven gear 322 supported by the first intermediate shaft 327 in a relatively non-rotatable manner so as to be meshed with the first driving gear 321 and a second driven gear 325 supported by second intermediate shaft 328 in a relatively non-rotatable manner so as to be meshed with the second driving gear 324 as the driven gears.

That is, the first driving gear 321 and the first driven gear 322 meshed with the first driving gear 321 form a first speed reduction gear train 323, and the second driving gear 324 and the second driven gear 325 meshed with the second driving gear 324 form a second speed reduction gear train 326.

In this embodiment, the first speed reduction gear train 323 and the second speed reduction gear train 326 have the same speed reduction ratios (the same gear ratios).
More concretely, the first driving gear 321 of the first speed reduction gear train 323 and the second driving gear 324 of the second speed reduction gear train 326 are the same (having the same shapes and the same number of teeth), and the first driven gear 322 of the first speed reduction gear train 323 and the second driven gear 325 of the second speed reduction gear train 326 are the same (having the same shapes and the same number of teeth).

According to this structure, it is possible to form the speed reduction gear unit 320 having the plurality of speed-change stages only by manufacturing one kind of driving gear and one kind of driven gear. Therefore, it is possible to reduce the manufacturing cost of the speed reduction gear unit 320 having the plurality of speed-change stages and to stabilize the quality thanks to the simplification of the structure.

In the embodiment, to the inner surfaces of the bulging regions 33 of the right and left case members 30R, 30L forming the transmission case 30, plate-like support members 350 are fixed. The support members 350 support the input shaft 310, the first intermediate shaft 327 and the second intermediate shaft 328 in a rotatable manner around its axis line.

The support members 350 include bearing holding portions 351 which are formed by pressing and in which bearings 360 are engaged. The bearings 360 support the input shaft 310, the first intermediate shaft 327 and the second intermediate shaft 328.

The provision of the support member 350 with the bearing holding portion 351 as a member separate from the transmission case 30 could secure the positioning precision of the speed reduction gear unit 320 without an excessive high machining precision in forming the transmission case 30 using a mold.

Further, the support members 350, which are separate from the case members 30R, 30L, could be formed with thin plates enough to support the shafts. Thus, the bearing holding portions 351 could be easily formed by using light-weighted press. Therefore, the manufacturing cost can be reduced as compared with a case in which the transmission case 30 is formed with the bearing holding structure.

Furthermore, according to the structure, even in a case where it is necessary to change the relative supporting position of the input shaft 310 and the intermediate shafts 327, 328 in accordance with change in specification of the speed reduction gear unit 320, it is possible to change the relative supporting position without changing the shape of the transmission case 30.

In this embodiment, the chain unit 340 includes a driving sprocket 341 supported by the intermediate shaft (the second intermediate shaft 328 in this embodiment) in a relatively non-rotatable manner, a driven sprocket 342 supported by the output shaft 330 in a relatively non-rotatable manner, and a chain 343 which is wound around the driving sprocket 341 and the driven sprocket 342.

As described above, the gears in the speed reduction gear unit 302 are accommodated in the bulging regions 33 of the transmission case 30 which bulges outward in the widthwise direction of the cultivating machine 1.
On the other hand, the chain 343 is accommodated in a portion (the other region) of the transmission case 30 which is narrowed as compared with the bulging region 33.

That is, in this embodiment, the transmission case 30 is configures so that only the portion which accommodates the speed reduction gear unit 302 is wide to form the bulging region 33 and the other region which accommodates the chain 343 is narrow.

According to the structure, it is possible to make the transmission case 30 compact as much as possible while effectively securing the accommodating space of the speed reduction gear unit 302 by the bulging region 33, and to utilize the step 32 existing at the boundary between the other region and the bulging region 33 as a positioning member for determining the relative position between the transmission case 30 and the pair of plate members 40.

In the embodiment, the lower curved portion 33r in the bulging region 33 of the transmission case 30 has a shape along the outer peripheral shape of the driven gear (the second driven gear 325 in this embodiment) so that the curvature radius of the lower curved portion 33r is small as much as possible. By reducing the curvature radius of the lower curved portion 33r in the bulging region 33 of the transmission case 30 which is engaged into the recess 41 of the engine frame 4 as small as possible, it is possible to eliminate the waste of the internal space in the lower curved portion 33r of the bulging region 33, thereby reducing the walking type cultivating machine 1 in size.

Next, the clutch mechanism 9 which operatively connects the engine with the transmission mechanism 3 will be explained.

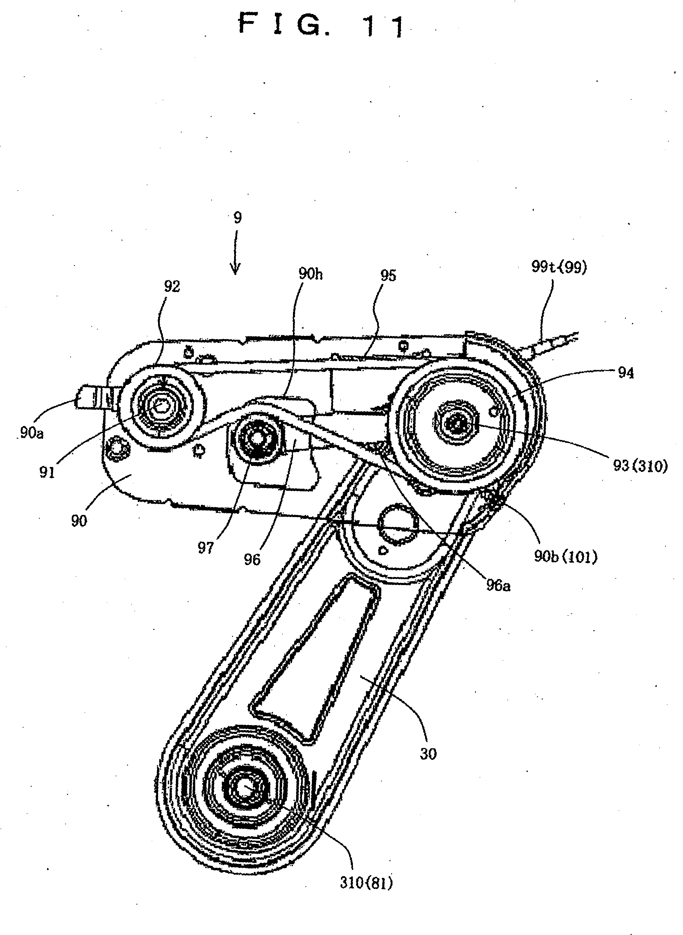

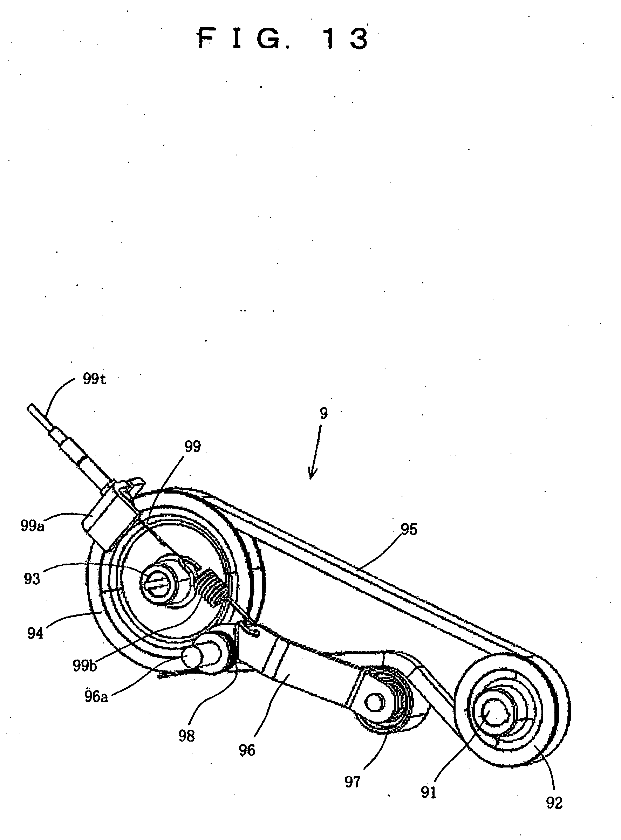

Figs. 11 to 13 are a left side view, a perspective view and a right perspective view of the clutch mechanism 9 in the walking type cultivating machine 1, respectively.

In the embodiment, the clutch mechanism 9 includes a side plate 90 disposed outside (on the left side) of the engine 2 and the transmission case 30, an input shaft 91 supported by the side plate 90 so as to have a first end operatively connected to an output shaft (not shown) of the engine 2 and a second end positioned on the opposite side (on the left side) of the side plate 90 from the engine 2, a driving pulley 92 supported by the input shaft 91 in a relatively non-rotatable manner, an output shaft 93 supported by the side plate 90 so as to have a first end operatively connected to the input shaft 310 of the transmission mechanism 3 and a second end positioned on the opposite side (on the left side) of the side plate 90 from the transmission case 30, a driven pulley 94 supported by the output shaft 91 in a relatively non-rotatable manner, a transmission belt 95 which is wound around the driving pulley 92 and the driven pulley 94 so as to transmit the rotational power of the input shaft 91 to the output shaft, an arm member 96 whose proximal end is supported by the side plate 90 such that a distal end of the arm member 96 can approach and separate from the transmission belt 95, a tension roller 97 which is mounted on the distal end of the arm member 96 so as to come into contact with the transmission belt 95, a biasing member 98 which biases the arm member 96 in such a direction that the tension roller 97 separates from the transmission belt 95, and an operation wire 99 which has a first end operatively connected to the arm member 96 and which rotates the arm member 96 against a biasing force of the biasing member 98 in such a direction that the tension roller 97 approaches the transmission belt 95 in accordance with the operation of a clutch lever which is described later.

The input shaft 91 is disposed coaxially with the output shaft of the engine 2, and the output shaft 93 is disposed coaxially with the input shaft 310 of the transmission mechanism 3.
In this embodiment, the engine 2 and the transmission mechanism 3 are disposed such that a virtual plane which passes through the output shaft of the engine 2, the input shaft 91 of the clutch mechanism 9, the input shaft 310 of the transmission mechanism 3 and the output shaft 93 of the clutch mechanism 9 is directed substantially horizontally.

The arm member 96 is supported such that the proximal end is rotatable around a rotational shaft 96a which is supported by the side plate 90 behind an intermediate portion between the driving pulley 92 and the driven pulley 94.
The arm member 96 is biased around the rotational shaft 96a by a biasing force of the biasing member 98 in such a direction that the tension roller 97 does not apply tension to the transmission belt 95 when the clutch lever is not operated. The arm member 96 is biased around the rotational shat 96a in such a direction that the tension roller 97 applies tension to the transmission belt 95 through the operation wire 99 (in such a direction that the tension roller 97 pushes up a portion of the transmission belt 95 located on the lower side in the illustrated embodiment) when the clutch lever is operated.

The transmission belt 95 is in a state where the rotational power of the driving pulley 92 is not transmitted to the driven pulley 94 (clutch OFF state in which the transmission belt 95 slips over the pulleys and does not move around even if the driving pulley 92 rotates) when tension is not applied by the tension roller 97. The transmission belt 95 is in a state where the rotational power of the driving pulley 92 is transmitted to the driven pulley 94 (clutch-engaged state in which the transmission belt 95 moves in an endless manner to rotate the driven pulley 94 in accordance with rotation of the driving pulley 92) when tension is applied by the tension roller 97 (when the transmission belt 95 is pushed up by the tension roller 97).

In this embodiment, the rotational shaft 96a is supported not only by the side plate 90 but also by the transmission case 30. That is, the rotational shaft 96a is supported at both ends by the side plate 90 and the transmission case 30 (the left case member 30L thereof). The configuration makes it possible to stably and precisely rotate the arm member 96 around the rotational shaft 96a.

The side plate 90 is provided with an opening 90h which permits the tension roller 97 to rotate or turn around the rotational shaft 96a. That is, the arm member 96 is located on the side (the right side) of the side plate 90 close to the engine 2 and the transmission case 30, and the tension roller 97 is located on the opposite side of the side plate 90 from the engine 2 and the transmission case 30 through the opening 90h.

In the embodiment, the biasing member 98 is a coil spring wound around the rotational shaft 96a in a state where its one end is engaged with the proximal end of the arm member 96, and biases the arm member 96 in such a direction that the tension roller 97 separates away from the transmission belt 95.

The operation wire 99 has a first end connected to the arm member 96 so as to pull the arm member 96 in the direction opposite from the biasing direction of the biasing member 98 in a state of being inserted into a wire tube 99t. In this embodiment, the first end of the operation wire 99 is connected to the arm member 96 through a buffer member (an extension spring in this embodiment) 99b.

The side plate 90 is provided with a guide member 99a at a side surface on the side (the right side) close to the transmission case 30. An end of the wire tube 99t on the side close to the first end of the operating wire is fixed to the guide member 99a. With this structure, only the operation wire 99 in the wire tube 99t is pulled in accordance with the operation of the clutch lever.

As described above, in the embodiment, the members (especially, the arm member 96, the tension roller 97, the biasing member 98, the guide member 99a, the driving pulley 92 and the driven pulley 94) forming the clutch mechanism 9 are mounted on the side plate 90 to form a unit. With this structure, it is possible to facilitate the assembling workability in the final step and stabilize the quality of the completed product, and to easily adjust the tension or the like.
Instead of this, it is also possible to unitize the members forming the clutch mechanism 9 by mounting them on the transmission case 30. In this case also, the same effect can be also obtained.

The cultivating machine 1 according to this embodiment includes a clutch case 100 mounted on an outer surface (here, left surface) of the side plate 90 such as to cover the driving pulley 92, the driven pulley 94 and the transmission belt 95.

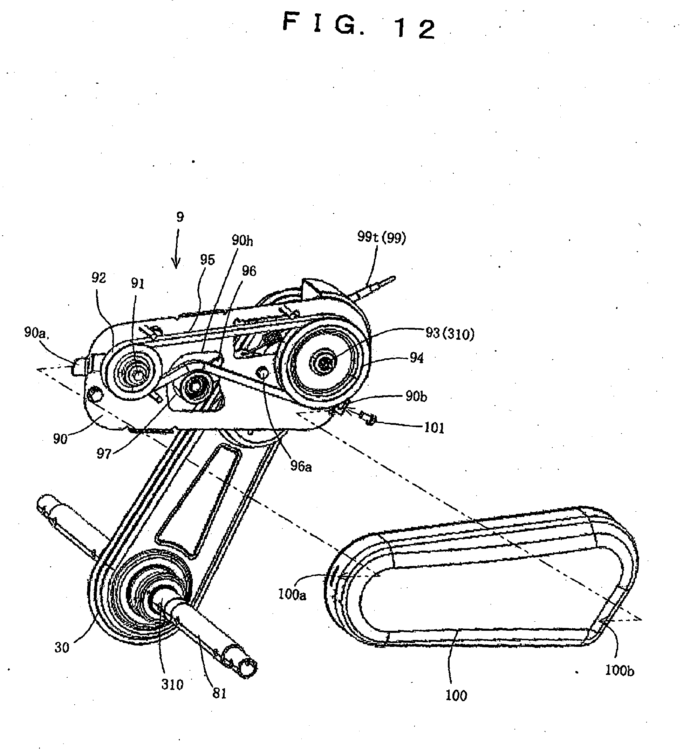

More specifically, as shown in Fig. 12, the clutch case 100 includes a slit 100a formed in one end (here, front end) thereof, and a fastening hole 100b formed in the other end (here, rear end).

The side plate 90 includes a plate member 90a mounted such that the plate member 90a can be fitted into the slit 100a, and a fastening hole 90b formed in the other end at a location corresponding to the fastening hole 100b.

The clutch case 100 is mounted to the side plate 90 by a fastening member 101 such as a bolt inserted into the fastening holes 90b and 100b in a state where the plate member 90a is inserted into the slit 100a of the clutch case 100.

The configuration makes it possible to reliably mount the clutch case 100 on the side plate 90 with a simple structure.
That is, there is proposed a conventional structure in which the clutch case is mounted on the side plate by fastening a central portion of a side surface of the clutch case to the side plate by a fastening member such as a bolt. However, in this conventional structure, the clutch case relatively rotates around the axis of the fastening member with respect to the side plate, and there is a problem that the fastening force of the fastening member is loosened by this relative rotation.

On the other hand, the structure of this embodiment makes it possible to effectively prevent the clutch case from moving relative to the side plate 90. Therefore, it is prevented that the fastening force of the fastening member 101 is loosened due to the movement of the clutch case 100 relative to the side plate 90, thereby stably mounting the clutch case 100 on the side plate 90.

Further, since the fastening member 101 is not mounted on the central portion of the side surface of the clutch case 100 in this embodiment, the fastening member does not attract attention, thereby enhancing a beautiful sight.

Next, a clutch lever structure 70 provided on the cultivating machine 1 for operating the clutch mechanism 3 will be explained.

As described above, the cultivating machine 1 has the handle unit 7 detachably connected to the handle frame 5.
As shown in Figs. 1 to 3, the handle unit 7 includes a bifurcated handle bar 51 having a proximal end connected to an upper end of the handle frame 5 and bifurcated two free ends, grips 51a provided on the free ends of the handle bar 51, and a throttle lever structure 79 and the clutch lever structure 70 provided near the grips 51a.
In the embodiment, the throttle lever structure 79 including a throttle lever that is provided near the right grip 51a, and the clutch lever structure 70 including a clutch lever 71 that is provided near the left grip 51a.

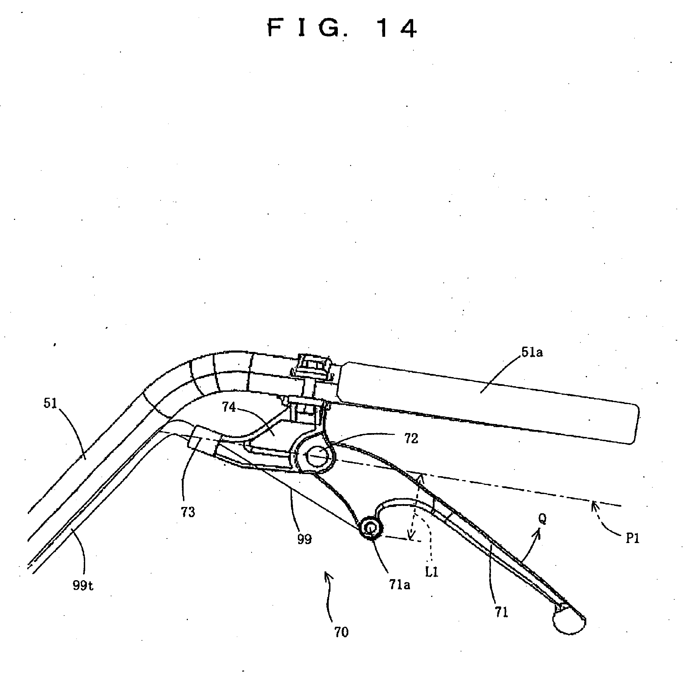

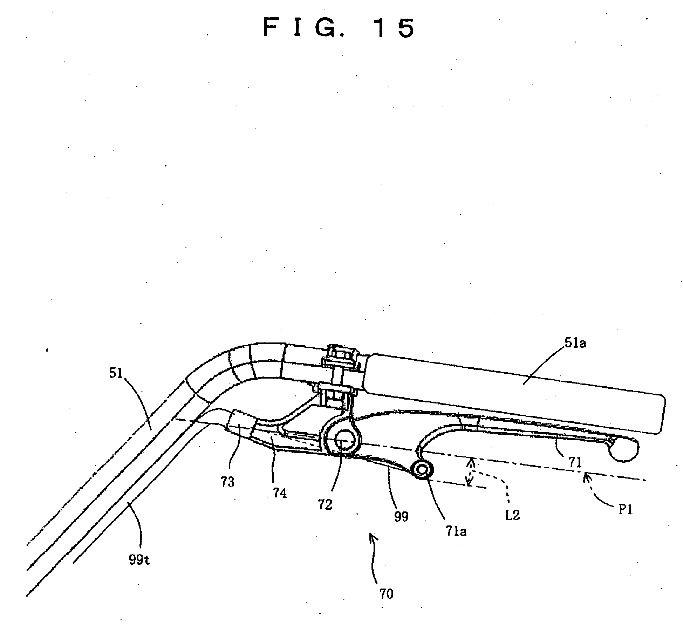

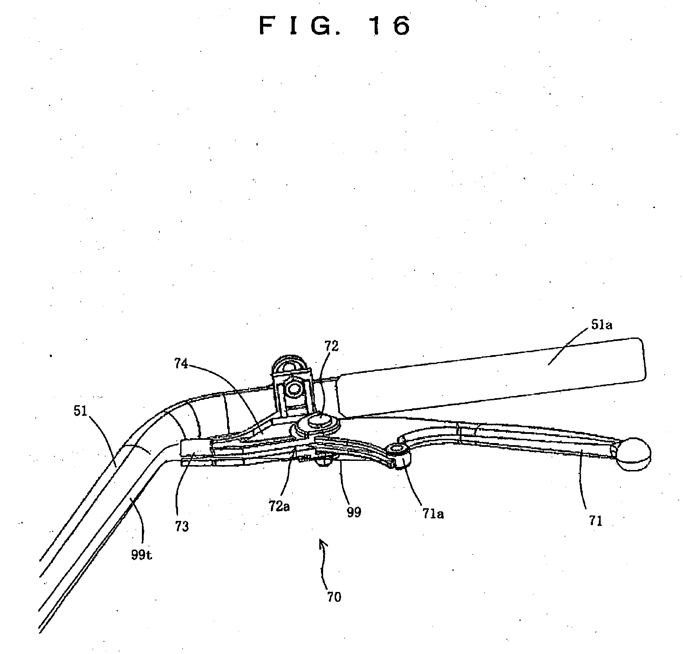

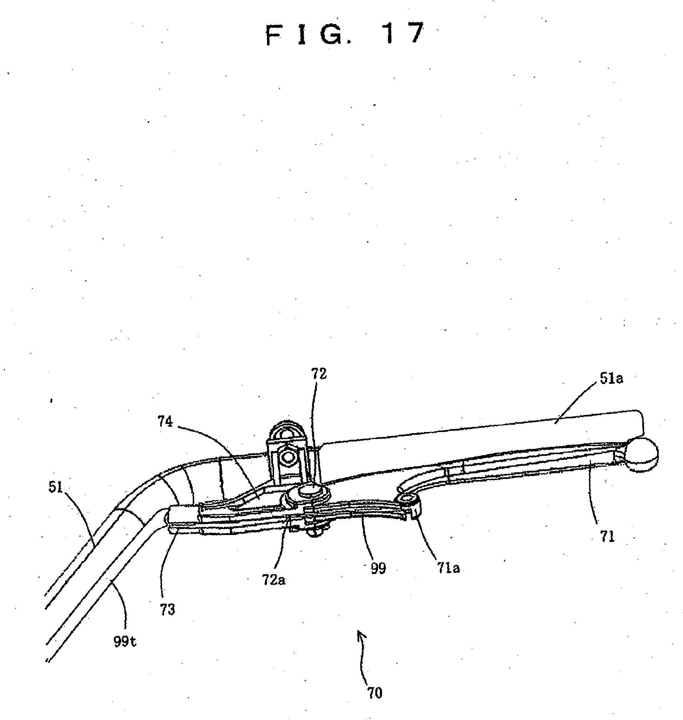

Figs. 14 and 15 show the clutch lever structure 70 as viewed from a direction along a pivot shaft 72 of the clutch lever 71. Figs. 16 and 17 show the clutch lever structure 70 shown in Figs. 14 and 15 as viewed from below. Figs. 14 and 16 show a non-operated state of the clutch lever, and Figs. 15 and 17 show an operated state of the clutch lever.

As shown in Figs. 1 to 3, 14 and 15, the clutch lever 71 is connected to one grip (the left grip 51a in this embodiment) of the handle bar 51 in a rotatable manner around the pivot shaft 72.
In the embodiment, the clutch lever 71 is connected to a lower side of the corresponding grip 51a in a rotatable manner around the pivot shaft 72.

The clutch lever 71 is positioned at a clutch releasing position (Fig. 14) away from the grip 51a by the biasing force of the biasing member 98 in the clutch mechanism 9 when an operating force is not applied to the clutch lever 71, and the clutch lever 71 is positioned at a clutch engaging position (Fig. 15) close to the grip 51a when the operating force is applied to the clutch lever 71 against the biasing force.

The clutch lever structure 70 includes, in addition to the clutch lever 71, the operation wire 99 for transmitting the operating force from the clutch lever 71 to the clutch mechanism 9, and a guide member 73 for guiding the operation wire 99 near the clutch lever 71.

In the clutch lever structure 70, as the clutch lever 71 rotates around the pivot shaft 72 from the clutch releasing position toward the clutch engaging position, a connecting portion 71a of the clutch lever 71 to which a second end of the operation wire 99 that is opposite the first end is connected approaches a virtual plane P1 which passes a guide position of the operation wire 99 by the guide member 73 and an axis line of the pivot shaft 72.

In the embodiment, as shown in Fig. 14, when the clutch lever 71 is positioned at the clutch releasing position, the connecting portion 71a is positioned on the opposite side of the virtual plane P1 from the grip 51a, and as the clutch lever 71 is operated from the clutch releasing position to the clutch engaging position, the connecting portion 71a moves upward.

More specifically, the clutch lever structure 70 includes a mounting stay 74 mounted on the handle bar 51. The guide member 73 and the pivot shaft 72 are provided on the mounting stay 74.

According to the configuration in which the guide member 73 and the pivot shaft 72 are integrally provided on the mounting stay 74, it is possible to effectively prevent a relative movement of the pivot shaft 72 and the guide position of the operation wire 99.

Further, according to the configuration, the virtual plane P1 passing the guide position and the axis line of the pivot shaft 72 is defined by a single member. Thus, the operating amount of the clutch lever 71 and the operating amount of the arm member 96 can be substantially constant irrespective of the assembling precision.

The clutch lever structure 70 is so-called of a deadman clutch type in which the clutch mechanism 9 is brought into the power transmitting state when an operator grasps the clutch lever 71 together with the grips 51a of the handle bar 51, and the clutch mechanism 9 is brought into a power shut-off state when the operator releases his or her hand.

That is, when an operating force is not applied to the clutch lever 71, the clutch lever 71 is positioned at the clutch releasing position away from the grip 51a by the biasing force of the biasing member 98 of the clutch mechanism 9 (Fig. 14).
When the operator grasps the clutch lever 71 together with the grip 51a against the biasing force so that the operating force is applied to the clutch lever 71, the clutch lever 71 is moved to the clutch engaging position near the grip 51a (Fig. 15) from the clutch releasing position.

The operating force which moves the clutch lever 71 to the clutch engaging position from the clutch releasing position is transmitted to the clutch mechanism 9 as a pulling force through the operation wire 99 which is connected to the connecting portion 71a of the clutch lever 71 and which is guided by the guide member 73, and the clutch mechanism 9 is shifted from the power shut-off state to the power transmitting state by this pulling force.

In the embodiment, as the clutch lever 71 rotates or swings from the clutch releasing position to the clutch engaging position, the connecting portion 71a approaches the virtual plane P1 passing the guide position of the operation wire 99 by the guide member 73 and the axis line of the pivot shaft 72.

That is, a distance L1 between the virtual plane P1 and the connecting portion 71a when the clutch lever 71 is positioned at the clutch releasing position shown in Fig. 14 becomes shorter than a distance L2 between the virtual plane P1 and the connecting portion 71a when the clutch lever 71 is positioned at the clutch engaging position (L1 > L2).

In this embodiment, as shown in Fig. 15, when the clutch lever 71 is positioned at the clutch engaging position, the connecting portion 71a of the clutch lever 71 is positioned substantially opposite side from the guide member 73 with the pivot shaft 72 as a reference.

To realize this, as shows in Figs. 16 and 17, the mounting stay 74 and the clutch lever 71 are provided with a groove 72a which opens downward so that the operation wire 99 can be engaged into the groove 72a when the clutch lever 71 is positioned at the clutch engaging position.

More specifically, the groove 72a is formed in the mounting stay 74 and the clutch lever 71 so as to be over a region of the mounting stay 74 extending between the guide member 73 and the pivot shaft 72 and a region of the clutch lever 71 extending between the connecting portion 71a and the pivot shaft 72.

By providing the groove 72a, as shown in Figs. 15 and 17, when the clutch lever 71 is positioned at the clutch engaging position, the operation wire 99 is positioned in the groove 72a so that the connecting portion 71a to which the operation wire 99 is connected is allowed to be located at a position substantially opposite from the guide member 73 with the pivot shaft 72 as a reference.

With this structure, when the clutch lever 71 is positioned at the clutch engaging position, the connecting portion 71a of the clutch lever 71 to which the operation wire 99 is connected can approach the virtual plane P1 as close as possible.
Therefore, the operating force required for holding the clutch lever 71 at the clutch engaging position can be reduced as much as possible, thereby reducing the fatigue of the operator.

It is not always necessary to provide the groove 72a as long as the operation wire 99 approaches the virtual plane P1 as close as possible when the clutch lever 71 is located at the clutch engaging position. In a case where the groove 72a is not provided, the operation wire 99 may come into contact with the pivot shaft 72 so that the operation wire 99 is bent around the pivot shaft 72.

As described above, as the clutch lever 71 is operated from the clutch releasing position to the clutch engaging position, the connecting portion 71a of the clutch lever 71 to which the operation wire 99 is connected approaches the virtual plane P1 passing the guide position of the operation wire 99 and the axis line of the pivot shaft 72 of the clutch lever 71 as close as possible. According to the configuration, the operating force required for holding the clutch lever 71 at the clutch engaging position can be made as small as possible. Therefore, an operator can hold the clutch lever 71 at the clutch engaging position with a lighter operating force, thereby effectively preventing the operator from becoming fatigued even in a long time operation.

Although the embodiment of the present invention has been explained above, the invention is not limited to the embodiment. This invention can variously be improved, changed and modified within a range not departing from its subject matter.

## Claims

1. A walking type cultivating machine (1) comprising an engine (2), a transmission mechanism (3) having an input side (310) which is operatively connected to the engine (2), a transmission case (30) in which the transmission mechanism (3) is accommodated, an engine frame (4) extending forward from the transmission case (30) so as to support the engine (2), a handle frame (5) extending upward from the transmission case (30), a hitch frame (6) extending rearward from the transmission case (30), a handle unit (7) supported by the handle frame (5), and a cultivating shaft unit (8) operatively connected to an output side (330) of the transmission mechanism (3), a pair of plate members (40R, 40L) opposed to each other with sandwiching the transmission case (30) therebetween,
the plate members (40R, 40L) including central regions (40M) fixed to the transmission case (30) in a state of being contacted to outer surfaces of the transmission case (30) , front regions (40F) and rear regions (40B) respectively extending forward and rearward from the central region (40M),
the front regions (40F) and the rear regions (40B)
form the engine frame (4) and the hitch frame (6), respectively,
the transmission case (30) includes a pair of side walls (31R, 31L) opposed to each other in a widthwise direction of the cultivating machine (1),
the walking type cultivating machine (1) being **characterized in that**
the transmission case (30) and the engine frame (4) are integrally fixed to each other in an inseparable manner,
each of the side walls (31R, 31L) has one region that bulges outward in the widthwise direction with a step (32) from the other region so as to form a bulging region (33),
the central regions (40M) of the plate members (40R, 40L) are formed with recesses (41) that open upward as viewed from the side, and
the plate members (40R, 40L) are fixed to the transmission case (30) in a state where parts of the steps (32) are engaged into the corresponding recesses (41).

2. A walking type cultivating machine (1) according to claim 1, wherein the engine frame (4) and the handle frame (5) are integrally fixed to each other in an inseparable manner.

3. A walking type cultivating machine (1) according to claim 1 or 2, wherein
each of the bulging regions includes, in an outer shape as viewed from the side, a pair of straight sides (33sf, 33sr) that extend along a longitudinal direction of the transmission case (30) and a lower curved portion (33r) that connects lower ends of the pair of straight sides (33sf, 33sr) and that is convex downward, and
the recess (41) extends in a fore-and-aft direction of the cultivating machine (1) so as to be across a lowest point of the lower curved portion (33r) , and one end of front and rear ends of the lower curved portion (33r) reaches corresponding one of the front and rear straight sides (33sf, 33sr).

4. A walking type cultivating machine (1) according to claim 3, wherein
the transmission mechanism (3) includes an input shaft (310) supported by the transmission case (30) in a state capable of being operatively connected to the engine (2) , a speed reduction gear unit (320) which reduce the rotational speed of the input shaft (310), an output shaft (330) supported by the transmission case (30) in a state capable of being operatively connected to the cultivating shaft unit (8), and a chain unit (340) which transmits the rotational power whose speed is reduced by the speed reduction gear unit (320) to the output shaft (330), and
gears of the speed reduction gear units (320) are accommodated in an internal space defined by the bulging regions (33).

5. A walking type cultivating machine (1) according to any one of claims 1 to 4, wherein the handle frame (5) is fixed to the rear regions (40B) of the plate members (40R, 40L) and rear end surface of the transmission case (30 in a state of being sandwiched by the rear regions (40B).

## Patentansprüche

1. Handgeführte Kultiviermaschine (1), mit: einem Motor (2); einem Getriebemechanismus (3) mit einer Eingangsseite (310), welche mit dem Motor (2) wirkverbunden ist; einem Getriebegehäuse (30), in welchem der Getriebemechanismus (3) aufgenommen ist; einem Motorrahmen (4), welcher sich zum Tragen des Motors (2) von dem Getriebegehäuse (30) nach vorne erstreckt; einem Griffrahmen (5), welcher sich von dem Getriebegehäuse (30) nach oben erstreckt; einem Hakenrahmen (6), welcher sich von dem Getriebegehäuse (30) nach hinten erstreckt; einer Griffeinrichtung (7), welche von dem Griffrahmen (5) getragen ist; und einer Kultivierwelleneinrichtung (8), welche mit einer Ausgangsseite (330) des Getriebemechanismus (3) wirkverbunden ist; einem Paar Plattenelemente (40R, 40L), welche einander zugewandt das Getriebegehäuse (30) zwischen sich aufnehmen, wobei die Plattenelemente (40R, 40L) mittige Abschnitte (40M), welche berührend an Außenflächen des Getriebegehäuses (30) montiert sind, vordere Abschnitte (40F) und hintere Abschnitte (40B), welche sich jeweils von dem mittigen Abschnitt (40M) nach vorne und nach hinten erstrecken, aufweisen, wobei die vorderen Abschnitte (40F) und die hinteren Abschnitte (40B) entsprechend den Motorrahmen (4) und den Hakenrahmen (6) ausbilden, wobei das Getriebegehäuse (30) ein Paar Seitenwände (31R, 31L) aufweist, welche voneinander beabstandet in Breitenrichtung der handgeführten Kultiviermaschine (1) nach angeordnet, wobei die handgeführte Kultiviermaschine (1) **dadurch gekennzeichnet ist, dass**
das Getriebegehäuse (30) und der Motorrahmen (4) untrennbar miteinander verbunden sind;
jede der Seitenwände (31R, 31L) einen Abschnitt aufweist, welcher sich in der Breitenrichtung zum Ausbilden eines Vorwölbungsabschnittes (32) in Form einer Stufe (32) nach außen wölbt;
die mittigen Abschnitte (40M) der Plattenelemente (40R, 40L) Ausnehmungen (41) aufweisen, welche sich von der Seite betrachtet nach oben öffnen; und
die Plattenelemente (40R, 40L) derart an das Getriebegehäuse (30) montiert sind, dass sich Abschnitte der Stufen (32) mit den korrespondierenden Ausnehmungen (40) im Eingriff befinden.

2. Handgeführte Kultiviermaschine (1) nach Anspruch 1, wobei der Motorrahmen (4) und der Griffrahmen (5) untrennbar miteinander verbunden sind.

3. Handgeführte Kultiviermaschine (1) nach Anspruch 1 oder 2, wobei
jeder der Vorwölbungsabschnitte in einem von der Seite betrachteten Umriss ein Paar gerader Seiten (33sf, 33sr), welche sich in einer Längsrichtung des Getriebegehäuses (30) erstrecken, und einen unteren gebogenen Abschnitt (33r) aufweist, welcher untere Enden des Paares gerader Seiten (33sf, 33sr) verbindet und nach unten konvex ist; und
die Ausnehmung (41) sich derart in einer Längsrichtung der handgeführten Kultiviermaschine (1) erstreckt, dass diese über einen niedrigsten Punkt des unteren gebogenen Abschnittes (33r) führt, und ein Ende von Vorder- und Hinterenden des unteren gekrümmten Abschnittes (33r) entsprechend eine der vorderen und hinteren geraden Seiten (33sf, 33sr) erreicht.

4. Handgeführte Kultiviermaschine (1) nach Anspruch 3, wobei
der Getriebemechanismus (3) eine Eingangswelle (310), welche von dem Getriebegehäuse (30) in einem Zustand der Wirkverbindung mit dem Motor (2) gelagert ist, eine Geschwindigkeitsreduktionseinrichtung (320), welche die Rotationsgeschwindigkeit der Eingangswelle (310) reduziert, eine Ausgangswelle (330), welche in einem Zustand der Wirkverbindung mit der Kultivierwelleneinrichtung (8) von dem Getriebegehäuse (30) gelagert ist, und eine Ketteneinrichtung (340) aufweist, welche die Rotationsenergie, deren Geschwindigkeit mittels der Geschwindigkeitsreduktionseinrichtung (320) reduziert wird, auf die Ausgangswelle (320) überträgt, und Gangstufen der Geschwindigkeitsreduktionseinrichtungen (320) in einem Innenraum aufgenommen sind, welcher durch die Vorwölbungsabschnitte (33) definiert ist.

5. Handgeführte Kultiviermaschine (1) nach einem der Ansprüche 1 bis 4, wobei der Griffrahmen (5) an die hinteren Abschnitte (40B) der Plattenelemente (40R, 40L) montiert ist und eine hintere Endoberfläche des Getriebegehäuses (30) zwischen den hinteren Abschnitten (40B) aufgenommen ist.

## Revendications

1. Machine de culture à commande manuelle de type marcheur (1) comprenant un moteur (2), un mécanisme de transmission (3) ayant un coté entrée (310) relié de manière fonctionnelle au moteur (2), un carter de transmission (30) dans lequel est logé le mécanisme de transmission (3), un châssis de moteur (4) s'étendant vers l'avant à partir du carter de transmission (30) de manière à supporter le moteur (2), un cadre de poignée (5) s'étendant vers le haut à partir du carter de transmission (30), un cadre d'attelage (6) s'étendant vers l'arrière du carter de transmission (30), une unité de poignée (7) supportée par le cadre de poignée (5), et une unité d'arbre de culture (8) reliée de manière fonctionnelle à un côté sortie (330) du mécanisme de transmission (3), une paire d'éléments plats (40R, 40L) se faisant face en prenant le carter de transmission (30) en sandwich entre eux, les éléments plats (40R, 40L) comprenant des zones centrales (40M) fixées au carter de transmission (30) de manière à ce qu'ils entrent en contact avec des surfaces extérieures du carter de transmission (30), des zones avant (40F) et des zones arrière (40B) s'étendant respectivement vers l'avant et l'arrière de la zone centrale (40M), les zones avant (40F) et les zones arrière (40B) forment respectivement le châssis de moteur (4) et le cadre d'attelage (6), le carter de transmission (30) comprend une paire de parois latérales (31R, 31L) se faisant face dans le sens de la largeur de la machine de culture (1), la machine de culture à commande manuelle de type marcheur (1) étant **caractérisée par le fait que** le carter de transmission (30) et le châssis de moteur (30) sont intégralement fixés l'un à l'autre de manière inséparable, chacune des parois latérales (31R, 31L) a une zone bombée vers l'extérieur dans le sens de la largeur avec un gradin (32) provenant de l'autre zone de manière à former une zone bombée (33), les zones centrales (40M) des éléments plats (40R, 40L) sont formées d'évidements (41) s'ouvrant vers le haut comme représenté vu de côté, et les éléments plats (40R, 40L) sont fixés au carter de transmission (30) de manière à ce que des parties des gradins (32) viennent en prise avec les évidements correspondants (41).

2. Machine de culture à commande manuelle de type marcheur (1) selon la revendication 1, dans laquelle le châssis de moteur (4) et le cadre de poignée (5) sont intégralement fixés l'un à l'autre de manière inséparable.

3. Machine de culture à commande manuelle de type marcheur (1) selon la revendication 1 ou 2, dans laquelle chacune des zones bombées comprend, sous une forme différente de la représentation vue de côté, une paire de parois droites (33sf, 33sr) qui s'étendent le long d'une direction longitudinale du carter de transmission (30) et une partie inférieure courbe (33r) qui relie les extrémités inférieures de la paire de parois droites (33sf, 33sr) et qui est convexe vers le bas, et l'évidement (41) s'étend dans une direction d'avant en arrière de la machine de culture (1) de manière à se trouver en travers d'un point le plus bas de la partie inférieure courbe (33r), et une extrémité des extrémités avant et arrière de la partie inférieure courbe (33r) atteint l'une des parois droites avant et arrière correspondantes (33sf, 33sr).

4. Machine de culture à commande manuelle de type marcheur (1) selon la revendication 3, dans laquelle le mécanisme de transmission (3) comprend un arbre d'entrée (310) supporté par le carter de transmission (30) de manière à être apte à être relié de manière fonctionnelle au moteur (2), un bloc d'engrenages de réduction de vitesse (320) qui réduit la vitesse de rotation de l'arbre d'entrée (310), un arbre de sortie (330) supporté par le carter de transmission (30) de manière à être apte à être relié de manière fonctionnelle à l'unité d'arbre de culture (8), et une unité de chaîne (340) qui transmet la force de rotation dont la vitesse est réduite par l'unité de réduction de vitesse (320) à l'arbre de sortie (330), et des engrenages des blocs d'engrenages de réduction de vitesse (320) sont logés dans une espace interne défini par les zones bombées (33).

5. Machine de culture à commande manuelle de type marcheur (1) selon l'une quelconque des revendications 1 à 4, dans laquelle le cadre de poignée (5) est fixé aux zones arrière (40B) des éléments plats (40R, 40L) et à la surface d'extrémité arrière du carter de transmission (30) de manière à être pris en sandwich par les zones arrière (40B).
